# FASCICULE DE BREVET EUROPEEN

(11) **EP 0 943 650 B1**
(45) Date de publication et mention de la délivrance du brevet: **19.11.2003**
(21) Numéro de dépôt: 99200790.6
(22) Date de dépôt: 10.03.1999
(51) Int. Cl.: C08K 5/01, C08L 23/04, C08K 5/14

(54) **Composition à base de polymère de l'éthylène, procédé pour son obtention et utilisation**
Ethylenpolymerzusammensetzung, Verfahren zu ihrer Herstellung und ihre Verwendung
Ethylene polymer composition, method for obtaining and use

(30) Priorité: 19.03.1998 US 44236
(43) Date de publication de la demande: 22.09.1999
(73) Titulaire: SOLVAY POLYOLEFINS EUROPE - BELGIUM (Société Anonyme), 1050 Bruxelles (BE)
(72) Inventeur: Carter, Stephen J., Houston Texas, TX 77054 (US); Cardon, Laurent, 1150 Bruxelles (BE); Coppens, Wim, 9080 Merelbeke (BE)
(74) Mandataire: Smith, Julian Philip Howard

(56) Documents cités:
- GB-A- 1 529 844
- US-A- 4 510 031
- SUWANDA D. AND BALKE S.T.: 'The Reactive Modification Of Polyethylene. I: The Effect of Low Initiator Concentrations on Molecular Properties.' POLYMER ENGINEERING AND SCIENCE vol. 33, no. 24, 1993, pages 1585 - 1591

## Description

La présente invention concerne une composition à base de polymère de l'éthylène ayant des propriétés rhéologiques en fondu améliorées. Elle concerne également un procédé d'obtention de cette composition ainsi que son utilisation pour la fabrication d'objets façonnés. Elle concerne enfin des objets façonnés contenant cette composition.

Le polyéthylène est un polymère thermoplastique semi cristallin qui connaît de nombreuses applications notamment dans le domaine de l'extrusion de tubes, le gainage -par extrusion- de câbles et le rotomoulage. Il présente néanmoins une tenue en fondu ("melt strength") et donc une viscosité élongationnelle non optimale pour la fabrication d'objets à parois épaisses par ces procédés de transformation.

Il est connu que l'on peut améliorer les propriétés en fondu du polyéthylène en le mélangeant à l'état fondu avec de très faibles quantités de peroxydes (D. Suwanda et S.T. Balke, Polymer Engineering and Science, december 1993, vol. 33, n° 24, pp. 1585-1592, en particulier p. 1586). Le polyéthylène modifié ainsi obtenu ne présente pas de réticulation notable.

On a par ailleurs déjà proposé de réticuler le polyéthylène au moyen de peroxydes, mis en oeuvre en quantité nettement plus élevée (à raison de 0,3 % en poids au moins), en mélange avec du 2,4-diphényl-4-méthyl-1 pentène, ce dernier ayant essentiellement pour effet de réduire l'effet de "scorching", c'est-à-dire la réticulation prématurée qui conduit à des défauts de surface (demande de brevet EP-A-0 453 204).

La présente invention vise à procurer une composition à base de polyéthylène modifié dont la tenue en fondu est encore améliorée et qui ne présente pas de réticulation notable. A cet effet, l'invention concerne une nouvelle composition à base de polymère de l'éthylène, caractérisée en ce qu'elle est obtenue par mélange en fondu de :
- 100 parties en poids d'un polymère de l'éthylène avec
- de 0,0005 à 0,1 partie en poids d'un composé (a) susceptible de générer des radicaux libres et
- de 0,0005 à 0,1 partie en poids de coagent (b) choisi parmi les alkènes en C₃ à C₁₂ et les alkadiènes en C₅ à C₁₆.

Les compositions selon l'invention présentent une viscosité apparente en fondu à bas gradient de vitesse nettement plus élevée, un indice de fluidité ("Melt Index") nettement réduit et un étalement de la distribution des masses moléculaires, par comparaison avec du polyéthylène traité en fondu uniquement avec de faibles quantités de peroxydes. De ce fait, elles sont particulièrement bien adaptées à la fabrication, par extrusion et rotomoulage, d'articles façonnés de grande dimension et/ou à parois épaisses présentant d'excellentes propriétés de surface.

Un effet surprenant de la présente invention réside dans l'effet de synergie important résultant de la mise en oeuvre conjointe avec le composé (a) générateur de radicaux libres d'un coagent (b) choisi parmi les alkènes et les alkadiènes tels que définis ci-dessus, dès lors que ces derniers n'ont pratiquement aucun effet sur la tenue en fondu des compositions lorsqu'ils sont utilisés en l'absence de générateurs de radicaux libres. En outre, les compositions selon l'invention sont peu sinon pas réticulées. En général, le taux d'insolubles dans le xylène chaud mesuré selon la norme ISO 6427 (extraction pendant 25 minutes à 140°C) est inférieur à 5 %, plus particulièrement à 2 % et le plus souvent à 1 %.

Le polymère d'éthylène mis en oeuvre dans les compositions selon l'invention est choisi parmi les homopolymères de l'éthylène et les copolymères de l'éthylène avec un ou plusieurs comonomères, ainsi que leurs mélanges.

Parmi les comonomères utilisables, on peut mentionner les oléfines linéaires ou branchées contenant de 3 à 8 atomes de carbone, telles que par exemple le butène, l'hexène et le 4-méthylpentène, ainsi que des dioléfines comprenant de 4 à 18 atomes de carbone, telles que le 4-vinylcyclohexène, le dicyclopentadiène, le 1,3-butadiène, etc. Les comonomères préférés sont le butène et l'hexène. Généralement, la teneur totale en comonomère(s) du copolymère de l'éthylène s'élève à 0,01 % molaire au moins et le plus souvent à 0,05 % molaire au moins. La quantité totale de comonomère(s) ne dépasse habituellement pas 10 % molaire et le plus souvent pas 5 % molaire. On obtient de bons résultats avec des copolymères de l'éthylène contenant au total de 0,05 à 5 % molaire et plus particulièrement encore de 0,3 à 2 % molaire de butène et/ou d'hexène. A titre d'exemples non limitatifs de copolymères de l'éthylène avantageusement mis en oeuvre dans les compositions selon l'invention, on peut mentionner les co- et terpolymères statistiques de l'éthylène et de butène et/ou d'hexène ou encore les copolymères à distribution bimodale des masses moléculaires obtenus par polymérisation séquencée de mélanges d'éthylène et de butène et/ou d'hexène. Les copolymères à distribution bimodale obtenus par polymérisation séquencée d'éthylène et d'un mélange d'éthylène et de butène conviennent particulièrement bien.

Le polymère d'éthylène mis en oeuvre dans les compositions selon l'invention présente en général une masse volumique standard, mesurée selon la norme ISO 1183 (1987), d'au moins 920 kg/m³ le plus souvent d'au moins 930kg/m³ et plus particulièrement encore d'au moins 935 kg/m³. En général, la masse volumique standard ne dépasse pas 960 kg/m³ et plus particulièrement encore 955 kg/m³.

Le plus souvent, le polymère d'éthylène mis en oeuvre dans les compositions selon l'invention est en outre caractérisé par un indice de fluidité ("melt index") , mesuré à 190°C sous une charge de 5 kg selon la norme ISO 1133 (1991), d'au moins 0,1g/10min, les valeurs d'au moins 0,2g/10min étant les plus courantes. L'indice de fluidité ne dépasse en général pas 10g/10min et le plus souvent 5g/10min.

Le polymère d'éthylène mis en oeuvre dans les compositions selon l'invention peut être obtenu par tout procédé de polymérisation connu et en présence des catalyseurs usuels de ce type de polymérisation, tels que par exemple les catalyseurs de type Phillips ou Ziegler.

Le composé (a) susceptible de générer des radicaux libres est le plus souvent choisi parmi les peroxydes organiques, les persulfates et les composés diazo (et leurs mélanges). On donne la préférence aux peroxydes organiques. A titre d'exemples non limitatifs de peroxydes pouvant être mis en oeuvre, seuls ou en mélange, dans la composition selon l'invention, on peut mentionner les peroxydes de diaryles, d'alkylaryles et de dialkyles tels que le peroxyde de dicumyle, le peroyde de t- butylcumyle et le 2,5-diméthyl-2,5-di(t-butylperoxy)hexane (DHBP) ou encore les peresters tels que l'éthyl 3,3-bis(t-butylperoxy)butyrate et l'éthyl 3,3-bis (t-amylperoxy)butyrate. Les peroxydes qui conviennent le mieux sont ceux qui se décomposent aux températures auxquelles est effectué le mélange en fondu. Le 2,5-diméthyl-2,5-di(t-butylperoxy)hexane (DHBP) a donné d'excellents résultats.

La quantité de composé (a) susceptible de générer des radicaux libres est le plus souvent comprise entre 0,001 et 0,08 partie pour 100 parties en poids de polyéthylène. De bons résultats sont obtenus par mise en oeuvre de 0,01 à 0,06 partie en poids de composé (a).

Le coagent (b) est choisi parmi les alkènes en C₃ à C₁₂ et les alkadiènes en C₅ à C₁₆ (et leurs mélanges). On donne la préférence aux alkènes en C₆ à C₁₀, plus particulièrement aux alkènes linéaires en C₆ à C₁₀ et tout particulièrement aux alkènes linéaires en C₆ à C₁₀ possédant une double liaison terminale. Un alkène tout particulièrement préféré est le 1-octène. On donne par ailleurs la préférence aux alkadiènes en C₆ à C₁₄, plus particulièrement aux alkadiènes non conjugués en C₆ à C₁₀ et tout particulièrement aux alkadiènes en C₆ à C₁₀ ayant des doubles liaisons terminales. Un alkadiène tout particulièrement préféré est le 1,9-décadiène.

La quantité de coagent (b) mis en oeuvre est le plus souvent comprise entre 0,001 et 0,08 partie pour 100 parties en poids de polyéthylène. De bons résultats sont obtenus par mise en oeuvre de 0,01 à 0,06 partie en poids de composé (b).

Le rapport pondéral entre la quantité de composé (a) et de composé (b) mis en oeuvre peut varier de 0,10 à 10 environ. Le plus souvent, ce rapport varie de 0,2 à 2,5.

Les compositions selon l'invention sont obtenues par mélange en fondu des différents constituants. Le plus souvent, ce mélange en fondu est réalisé dans des conditions de températures et de durée telles qu'il y ait réaction au moins partielle des molécules du coagent (b) avec le polymère d'éthylène.

Les conditions dans lesquelles sont effectuées ce mélange ne sont pas critiques pour autant qu'elles induisent la fusion au moins partielle du polymère d'éthylène. De préférence, elles sont telles qu'il y a fusion complète du polymère d'éthylène.

Généralement, le mélange est effectué à une température ne dépassant pas 300°C; de préférence cette température ne dépasse pas 250°C. La température minimale à laquelle le mélange en fondu est effectué est généralement supérieure ou égale à 140°C, de préférence elle est supérieure ou égale à 150°C. On obtient de bons résultats lorsque cette température est supérieure ou égale à 180°C et ne dépasse pas 240°C.

La durée du mélange est choisie en fonction de la nature des composés (a) et (b) et de la température de mélange. Cette durée varie généralement de 2 secondes à 10 minutes, le plus souvent de 5 secondes à 5 minutes. La durée optimale pourra être évaluée avantageusement par des essais préalables.

Le mélange du polymère d'éthylène avec les composés (a) et (b) peut être effectué dans tout dispositif connu à cet effet. Ainsi, on peut utiliser des malaxeurs internes ou externes. Les malaxeurs internes sont les plus appropriés et parmi ceux-ci les malaxeurs discontinus de type BRABENDER et les malaxeurs continus tels que les extrudeuses. Les extrudeuses sont généralement préférées.

L'ordre d'introduction des différents constituants de la composition à base de polymère d'éthylène selon l'invention n'est pas critique. Ceux-ci peuvent être introduits indifféremment isolément ou successivement dans le polymère d'éthylène. On peut également faire appel à la technique de mélange bien connue via un mélange-maître. Une méthode avantageuse consiste à réaliser d'abord des prémélanges par incorporation de la totalité du composé (a) générateur de radicaux libres et du coagent (b) dans une partie du polymère d'éthylène pour former un (des) prémélange(s) poudreux s'écoulant librement ("premix") et à mélanger ensuite ce(s) prémélange(s) avec le solde de polymère d'éthylène en même temps que les autres additifs éventuels de la composition, tels que des additifs de mise en oeuvre (antioxydants, antiacides, lubrifiants, ...), les charges, les pigments.... Le prémélange ("premix") contient généralement environ 0,5 à 15 parties en poids de composés (a) et (b) pour 100 parties de polymère d'éthylène.

Les compositions selon l'invention peuvent se présenter à l'état de granules obtenus, de manière connue, par extrusion de la composition en coupant le jonc sortant de l'extrudeuse en granules. Elles peuvent également se présenter à l'état de poudres obtenues par broyage ou micronisation des granules.

Les compositions selon l'invention peuvent être mises en oeuvre par tous les procédés classiques de fabrication d'objets façonnés en polymère d'éthylène, tels que les procédés d'extrusion, d'extrusion-soufflage, d'extrusion-thermoformage et d'injection, ainsi que pour le rotomoulage. Elles conviennent bien pour la mise en oeuvre par extrusion (à l'état de granules) et le rotomoulage (à l'état poudreux) et plus particulièrement encore pour l'extrusion de tubes et le gainage -par extrusion- de câbles. Elles conviennent tout particulièrement pour l'extrusion de tubes destinés au transport de fluides sous pression, tels que de l'eau et du gaz et, en particulier, de tubes de gros diamètre.

La composition selon l'invention présente généralement un indice de fluidité, mesuré à 190°C, sous une charge de 5 kg selon la norme ISO 1133(1991) d'au moins 0,05 g/10min. Le plus souvent, cet indice ne dépasse pas 5,0 g/10 min. Lorsque la composition est destinée à l'extrusion de granules, elle présente avantageusement un indice de fluidité , mesuré à 190°C sous une charge de 5 kg selon la norme ISO 1133(1991), au moins égal à 0,1 g/10 min et ne dépassant pas 1 g/10min. Lorsqu'elle est destinée au rotomoulage au moyen de poudres, elle présente avantageusement un indice de fluidité, mesuré à 190°C, sous une charge de 5 kg selon la norme ISO 1133(1991), au moins égal à 2g/10 min et qui ne dépasse pas 5g/10 min.

Les compositions selon l'invention sont mises en oeuvre pour la transformation en objets façonnés dans les conditions usuelles de mise en oeuvre à l'état fondu des polymères d'éthylène. En général, la température de mise en oeuvre est au moins égale à 150°C et ne dépasse pas 300°C. Le plus souvent, la température de mise en oeuvre est au moins égale à 180°C et ne dépasse pas 240°C.

Les exemples qui suivent sont destinés à illustrer les compositions selon l'invention. La signification des symboles utilisés dans ces exemples (ainsi que dans les exemples de référence), les unités exprimant les grandeurs mentionnées et les méthodes de mesure de ces grandeurs sont explicitées ci-dessous.
- MVS =: masse volumique standard mesurée à 23°C selon la norme ASTM D 972
- MI₅ =: indice de fluidité, mesuré à 190°C, sous une charge de 5 kg selon la norme ISO 1133 (1991)
- µ₀ =: viscosité relative apparente en fondu à 1 sec⁻¹ (mesurée à 190°C sur une filière conique de 0,2/2mm )
- µ₂ =: viscosité relative apparente en fondu à 100 sec⁻¹ (mesurée à 190°C sur une filière conique de 0,2/2mm )

L'exemple 1, de référence, se rapporte à une composition de polyéthylène exempte de peroxyde et de coagent.

L'exemple 2, de référence, se rapporte à une composition de polyéthylène contenant du peroxyde et exempte de coagent.

L'exemple 3, de référence, se rapporte à une composition de polyéthylène contenant du 1-octène à titre de coagent et exempte de peroxyde.

L'exemple 4, selon l'invention, se rapporte à une composition de polyéthylène contenant du peroxyde et du 1-octène (coagent).

L'exemple 5, de référence, se rapporte à une composition de polyéthylène contenant du 1,9-décadiène et exempte de peroxyde.

L'exemple 6, selon l'invention, se rapporte à une composition contenant du peroxyde et du 1,9-décadiène (coagent).

Dans tous les exemples, on a mis en oeuvre un copolymère de l'éthylène comprenant une distribution bimodale des masses moléculaires dont la MVS s'élève à 949 kg/m³ et le MI₅ à 0,45 g/10min et contenant 0,25 % en poids d'antioxydant phénolique et 0,1 % en poids d'antiacide. Ce copolymère obtenu par catalyse de type Ziegler comprend 50 % en poids d'un homopolymère de l'éthylène et 50 % en poids d'un copolymère de l'éthylène et du 1-butène comprenant 1 % molaire d'unités monomériques dérivées du 1-butène. Le peroxyde organique mis en oeuvre dans les exemples est le 2,5-diméthyl-2,5di(t-butylperoxy)hexane (DHBP). Le coagent mis en oeuvre dans les exemples 3 (de référence) et 4 (selon l'invention) est le 1-octène. Le coagent mis en oeuvre dans les exemples 5 (de référence) et 6 (selon l'invention) est du 1,9-décadiène. Le peroxyde est mis en oeuvre à raison de 0,02 partie et le coagent à raison de 0,05 partie en poids pour 100 parties de polyéthylène.

La fabrication des compositions des exemples s'est effectuée suivant le mode opératoire suivant :

On a d'abord préparé un premier prémélange ("premix 1") en incorporant progressivement, à température ambiante, 10 parties en poids de peroxyde dans 90 parties en poids de polyéthylène vierge dans un mélangeur lent tournant à 60 t/min pendant 5 minutes pour obtenir une poudre s'écoulant librement.

On a préparé un second prémélange ("premix 2") contenant 10 % en poids de coagent (b) en opérant dans les mêmes conditions que pour le premix 1.

Ensuite, on a introduit dans un mélangeur rapide tournant à 1000 t/min, 2g du premier prémélange (contenant 10 % en poids de DHBP), 5 g du second prémélange (contenant 10 % en poids de coagant (b) : 1-octène ou 1,9-décadiène selon le cas), 1g d'antiacide, 2,5 g d'un antioxydant phénolique et 989,5 g de polyéthylène vierge. Le mélange obtenu a été maintenu dans le mélangeur rapide à 23°C pendant 2 minutes.

La composition de polyéthylène obtenue a ensuite été extrudée sous azote à 240°C sur une mini-extrudeuse de type AXON (18mm) avec une vitesse de vis de 125mm tours/min et le profil de températures suivant : 240°C - 240°C - 240°C - 220°C - 195°C - 165°C.

Les compositions selon les exemples 4 et 6 sont totalement solubles dans le xylène chaud (extraction pendant 25 minutes à 140°C selon la norme ISO 6427). Elles présentent un indice de fluidité d'environ 0,2 g/10 min (cf. Tableau I).

Dans le Tableau I sont également repris les résultats des mesures suivantes sur les compositions fabriquées selon les exemples 1 à 6 : MI₅(mesuré sur des granules extrudés sous azote), µ₀ et µ₂, ainsi que µ₀/µ₂.

La comparaison des résultats des exemples 2(R) avec ceux de l'exemple selon l'invention 4 montre à suffisance la réduction notable de l'indice de fluidité MI₅ et l'augmentation notable de la viscosité relative apparente en fondu à bas (µ₀) et à haut gradient de cisaillement (µ₂) résultant de la mise en oeuvre conjointe de peroxyde organique et de 1-octène. Le rapport µ₀/µ₂ nettement plus élevé témoigne d'un élargissement appréciable de la distribution des masses moléculaires. La comparaison des résultats des exemples 3(R) et 4 montre qu'à lui seul le 1-octène n'a pas d'effet significatif sur ces grandeurs.

De même, la comparaison des résultats des exemples 2(R) et 5(R) avec ceux de l'exemple 6 montre un effet identique en cas de mise en oeuvre de peroxyde avec du 1,9-décadiène comme coagent.

**Tableau I**

| N° exemple | MI₅ | µ₀, 10³ Pas | µ₂, 10³ Pas | µ₀/µ₂ |
|---|---|---|---|---|
| 1 ( R ) | 0,614 | 325,7 | 48 | 6,79 |
| 2 ( R ) | 0,590 | 339,4 | 48,4 | 7,01 |
| 3 ( R ) | 0,56 | 358,9 | 49,5 | 7,25 |
| 4 | 0,19 | 1180 | 60,6 | 19,47 |
| 5 ( R ) | 0,50 | 379,8 | 52,8 | 7,19 |
| 6 | 0,18 | 1232 | 61,2 | 20,13 |

## Revendications

1. Composition à base de polymère de l'éthylène, **caractérisée en ce qu'**elle est obtenue par mélange en fondu de :
- 100 parties en poids d'un polymère de l'éthylène avec
- de 0,0005 à 0,1 partie en poids d'un composé (a) susceptible de générer des radicaux libres et
- de 0,0005 à 0,1 partie en poids de coagent (b) choisi parmi les alkènes en C₃ à C₁₂ et les alkadiènes en C₅ à C₁₆.

2. Composition à base de polymère de l'éthylène selon la revendication 1, **caractérisée en ce que** le composé (a) susceptible de générer des radicaux libres est choisi parmi les peroxydes organiques, les persulfates, les composés diazo et leurs mélanges.

3. Composition à base de polymère de l'éthylène selon la revendication 2, **caractérisée en ce que** le composé (a) susceptible de générer des radicaux libres est un peroxyde organique.

4. Composition à base de polymère de l'éthylène selon la revendication 3, **caractérisée en ce que** le peroxyde organique est le 2,5-diméthyl-2,5 di-(t-butylperoxy)hexane.

5. Composition à base de polymère de l'éthylène selon l'une quelconque des revendications 1 à 4, **caractérisée en ce que** le coagent (b) est choisi parmi les alkènes linéaires en C₆ à C₁₀ et les alkadiènes linéaires non conjugués en C₆ à C₁₂ et leurs mélanges.

6. Composition à base de polymère de l'éthylène selon la revendication 5, **caractérisée en ce que** le coagent (b) est choisi parmi le 1-octène et le 1,9-décadiène et leurs mélanges.

7. Composition à base de polymère de l'éthylène selon l'une quelconque des revendications 1 à 6, **caractérisée en ce que** le composé (a) susceptible de générer des radicaux libres et le coagent (b) sont mis en oeuvre à raison de 0,001 à 0,08 partie pour 100 parties de polymère d'éthylène.

8. Composition à base de polymère de l'éthylène suivant l'une quelconque des revendications 1 à 7, **caractérisée en ce que** le rapport pondéral entre le composé (a) générateur de radicaux libres et le coagent (b) est compris entre 0,1 et 10.

9. Procédé pour l'obtention d'une composition à base de polymère d'éthylène comprenant une étape de mélange en fondu de :
- 100 parties en poids d'un polymère de l'éthylène avec
- de 0,0005 à 0,1 partie en poids d'un composé (a) susceptible de générer des radicaux libres et
- de 0,0005 à 0,1 partie en poids de coagent (b) choisi parmi les alkènes en C₃ à C₁₂ et les alkadiènes en C₅ à C₁₆.

10. Procédé pour l'obtention d'une composition à base de polymère de l'éthylène selon la revendication 9, **caractérisé en ce que** le mélange en fondu s'effectue à une température supérieure ou égale à 140°C et qui ne dépasse pas 300°C pendant une durée de 2 secondes à 10 minutes.

11. Procédé pour l'obtention d'une composition à base de polymère de l'éthylène selon les revendications 9 et 10, appliqué à l'obtention d'une composition selon l'une quelconque des revendications 1 à 8.

12. Utilisation d'une composition selon l'une quelconque des revendications 1 à 8 pour la fabrication d'objets façonnés par extrusion ou rotomoulage.

13. Utilisation d'une composition selon l'une quelconque des revendications 1 à 8 pour l'extrusion de tubes, en particulier de tubes destinés au transport de fluides sous pression.

14. Objets façonnés contenant une composition à base de polymères de l'éthylène selon l'une quelconque des revendications 1 à 8.

## Patentansprüche

1. Zusammensetzung auf der Basis von Ethylenpolymer, **dadurch gekennzeichnet, dass** sie erhalten wird durch Mischen in der Schmelze von:
- 100 Gewichtsteilen eines Ethylenpolymers mit
- 0,0005 bis 0,1 Gewichtsteilen einer Verbindung (a), die freie Radikale erzeugen kann, und
- 0,0005 bis 0,1 Gewichtsteilen Coagens (b), das ausgewählt ist unter den C₃- bis C₁₂-Alkenen und den C₅- bis C₁₆-Alkadienen.

2. Zusammensetzung auf der Basis von Ethylenpolymer gemäß Anspruch 1, **dadurch gekennzeichnet, dass** die Verbindung (a), die freie Radikale erzeugen kann, ausgewählt ist unter den organischen Peroxiden, den Persulfaten, den Diazoverbindungen und deren Gemischen.

3. Zusammensetzung auf der Basis von Ethylenpolymer gemäß Anspruch 2, **dadurch gekennzeichnet, dass** die Verbindung (a), die freie Radikale erzeugen kann, ein organisches Peroxid ist.

4. Zusammensetzung auf der Basis von Ethylenpolymer gemäß Anspruch 3, **dadurch gekennzeichnet, dass** das organische Peroxid 2,5-Dimethyl-2,5-di(tbutylperoxy)hexan ist.

5. Zusammensetzung auf der Basis von Ethylenpolymer gemäß einem der Ansprüche 1 bis 4, **dadurch gekennzeichnet, dass** das Coagens (b) ausgewählt ist unter den linearen C₆- bis C₁₀-Alkenen und den nicht konjugierten linearen C₆- bis C₁₂-Alkadienen und deren Gemischen.

6. Zusammensetzung auf der Basis von Ethylenpolymer gemäß Anspruch 5, **dadurch gekennzeichnet, dass** das Coagens (b) ausgewählt ist unter 1-Octen und 1,9-Decadien und deren Gemischen.

7. Zusammensetzung auf der Basis von Ethylenpolymer gemäß einem der Ansprüche 1 bis 6, **dadurch gekennzeichnet, dass** die Verbindung (a), die freie Radikale erzeugen kann, und das Coagens (b) in einer Menge von 0,001 bis 0,08 Teilen pro 100 Teile Ethylenpolymer eingesetzt werden.

8. Zusammensetzung auf der Basis von Ethylenpolymer gemäß einem der Ansprüche 1 bis 7, **dadurch gekennzeichnet, dass** das Gewichtsverhältnis zwischen der Verbindung (a), die freie Radikale erzeugt, und dem Coagens (b) zwischen 0,1 und 10 liegt.

9. Verfahren zum Erhalt einer Zusammensetzung auf der Basis von Ethylenpolymer, das umfasst einen Schritt zum Mischen in der Schmelze von:
- 100 Gewichtsteilen eines Ethylenpolymers mit
- 0,0005 bis 0,1 Gewichtsteilen einer Verbindung (a), die freie Radikale erzeugen kann, und
- 0,0005 bis 0,1 Gewichtsteilen Coagens (b), das ausgewählt ist unter den C₃- bis C₁₂-Alkenen und den C₅- bis C₁₆-Alkadienen.

10. Verfahren zum Erhalt einer Zusammensetzung auf der Basis von Ethylenpolymer gemäß Anspruch 9, **dadurch gekennzeichnet, dass** das Mischen in der Schmelze bei einer Temperatur, die höher oder gleich 140 °C ist und die 300 °C nicht übersteigt, während einer Dauer von 2 Sekunden bis 10 Minuten erfolgt.

11. Verfahren zum Erhalt einer Zusammensetzung auf der Basis von Ethylenpolymer gemäß den Ansprüchen 9 und 10, angewandt auf die Herstellung einer Zusammensetzung gemäß einem der Ansprüche 1 bis 8.

12. Verwendung einer Zusammensetzung gemäß einem der Ansprüche 1 bis 8 für die Herstellung von Formteilen durch Extrusion oder Rotationsformen.

13. Verwendung einer Zusammensetzung gemäß einem der Ansprüche 1 bis 8 für die Extrusion von Rohren, insbesondere von Rohren, die für den Transport von fluiden Medien unter Druck bestimmt sind.

14. Formteile, die eine Zusammensetzung auf der Basis von Ethylenpolymeren gemäß einem der Ansprüche 1 bis 8 enthalten.

## Claims

1. Composition based on ethylene polymer, **characterised in that** it is obtained by mixing, in the molten state:
- 100 parts by weight of an ethylene polymer with
- from 0.0005 to 0.1 part by weight of a compound (a) capable of producing free radicals and
- from 0.0005 to 0.1 part by weight of co-agent (b) chosen from the alkenes from C₃ to C₁₂ and the alkadienes from C₅ to C₁₆.

2. Composition based on ethylene polymer according to claim 1, **characterised in that** compound (a) capable of producing free radicals is chosen from organic peroxides, persulfates, diazo compounds and their mixtures.

3. Composition based on ethylene polymer according to claim 2, **characterised in that** compound (a) capable of producing free radicals is an organic peroxide.

4. Composition based on ethylene polymer according to claim 3, **characterised in that** the organic peroxide is 2,5-dimethyl-2,5 di-(t-butylperoxy)hexane.

5. Composition based on ethylene polymer according to any one of claims 1 to 4, **characterised in that** co-agent (b) is chosen from the linear alkenes from C₆ to C₁₀ and the non-conjugated linear alkadienes from C₆ to C₁₂ and their mixtures.

6. Composition based on ethylene polymer according to claim 5, **characterised in that** co-agent (b) is chosen from 1-octene and 1,9-decadiene and their mixtures.

7. Composition based on ethylene polymer according to any one of claims 1 to 6, **characterised in that** compound (a) capable of producing free radicals and co-agent (b) are utilised at the rate of 0.001 to 0.08 part per 100 parts of ethylene polymer.

8. Composition based on ethylene polymer according to any one of claims 1 to 7 **characterised in that** the ratio by weight between compound (a) producing free radicals and co-agent (b) lies between 0.1 and 10.

9. Process for obtaining a composition based on ethylene polymer, comprising a stage for mixing in the molten state:
- 100 parts by weight of an ethylene polymer with
- from 0. 0005 to 0.1 part by weight of a compound (a) capable of producing free radicals and
- from 0.0005 to 0.1 part by weight of co-agent
(b) chosen from the alkenes from C₃ to C₁₂ and the alkadienes from C₅ to C₁₆.

10. Process for obtaining a composition based on ethylene polymer according to claim 9, **characterised in that** the mixing in the molten state is carried out at a temperature higher than or equal to 140 °C and not exceeding 300 °C for a period of 2 seconds to 10 minutes.

11. Process for obtaining a composition based on ethylene polymer according to claims 9 and 10, applied to the obtaining of a composition according to any one of claims 1 to 8.

12. Use of a composition according to any one of claims 1 to 8 for the manufacture of worked articles by extrusion or rotational moulding.

13. Use of a composition according to any one of claims 1 to 8 for the. extrusion of tubes, in particular tubes intended for the transport of fluids under pressure.

14. Worked articles containing a composition based on ethylene polymer according to any one of claims 1 to 8.
